# EUROPÄISCHE PATENTSCHRIFT

(11) **EP 0 819 462 B1**
(45) Veröffentlichungstag und Bekanntmachung des Hinweises auf die Patenterteilung: **09.05.2001**
(21) Anmeldenummer: 97110274.4
(22) Anmeldetag: 24.06.1997
(51) Int. Cl.: B01D 53/04, B01D 53/94, B01D 53/56, F01N 3/08

(54) **Abgasreinigungsanlage mit Stickoxid-Adsorbern für eine Brennkraftmaschine**
Gas purification arrangement for an internal combustion engine comprising nitricoxide adsorbers
Installation de purification de gaz d'échappement d'un moteur à combustion interne comprenant des adsorbeurs pour les oxydes nitriques

(30) Priorität: 17.07.1996 DE 19628796
(43) Veröffentlichungstag der Anmeldung: 21.01.1998
(73) Patentinhaber: DaimlerChrysler AG, 70567 Stuttgart (DE)
(72) Erfinder: Boegner, Walter, 71686 Remseck (DE); Haak, Karl-Ernst, Dr., 73669 Lichtenwald (DE); Krutzsch, Bernd, Dr., 73770 Denkendorf (DE); Verrelst, Wim, Dr., 2650 Edegem (BE); Voigtländer, Dirk, 70825 Korntal (DE); Wenninger, Günter, 70599 Stuttgart (DE); Wirbeleit, Friedrich, Dr., 73733 Esslinger (DE)

(56) Entgegenhaltungen:
- DE-A- 2 129 210
- DE-C- 4 319 294
- PATENT ABSTRACTS OF JAPAN vol. 095, no. 010, 30.November 1995 & JP 07 171340 A (CATALYSTS & CHEM IND CO LTD), 11.Juli 1995,
- PATENT ABSTRACTS OF JAPAN vol. 096, no. 003, 29.März 1996 & JP 07 310533 A (NIPPONDENSO CO LTD), 28.November 1995,
- PATENT ABSTRACTS OF JAPAN vol. 007, no. 014 (C-146), 20.Januar 1983 & JP 57 171420 A (TAIKISHIYA:KK;OTHERS: 01), 22.Oktober 1982,

## Beschreibung

Die Erfindung bezieht sich auf eine Abgasreinigungsanlage mit wenigstens zwei parallel angeordneten, wechselseitig im Adsorptions- und Desorptionsmodus betriebenen Stickoxid-Adsorberteilen und Mitteln zur Stromabwärts-Weiterleitung des aus dem jeweils momentan im Adsorptionsmodus betriebenen Adsorberteils austretenden Abgasstromes und zur Rückführung des aus dem jeweils momentan im Desorptionsmodus betriebenen Adsorberteils austretenden Abgasstromes in eine Ansaugleitung der Brennkraftmaschine.

Derartige Abgasanlagen sind aus der Patentschrift DE 43 19 294 C1 bekannt. Bei einer der dort gezeigten Anlagen führt die Abgasleitung vom Abgasausgang der Brennkraftmaschine zu einem Steuerventil, welches den Abgasstrom im Wechselbetrieb jeweils in einen von zwei stromabwärts anschließenden Abgasleitungszweigen einleitet, in denen jeweils ein Stickoxid-Adsorber positioniert ist. Als Alternativen werden Anlagen vorgeschlagen, bei denen nur ein Stickoxid-Adsorber sowie ein 3-Wege-Katalysator vorgesehen sind. In einer ersten Variante befinden sich Katalysator und Adsorber in zwei parallelen Abgasleitungszweigen, wobei eine Querleitung mit zugehörigem Steuerventil zwischen den beiden Zweigen vorgesehen ist, um im Adsorptionsbetrieb den Katalysatorausgang mit dem Adsorbereingang zu verbinden. Im Desorptionsbetrieb wird das Abgas nur mittels des Katalysators gereinigt. In einer zweiten Alternative befindet sich der Katalysator stromabwärts von einer Vereinigungsstelle, an der sich ein Abgasleitungszweig, in dem der Stickoxid-Adsorber liegt, mit einem Bypass-Leitungszweig vereinigt. Zur Unterstützung der Desorption wird die Zuführung eines heißen Gases oder die Anordnugn einer elektrisch betriebenen Heizvorrichtung vorgeschlagen.

Bei einer in der Offenlegungsschrift JP 5-195756 (A) offenbarten Abgasreinigungsanlage für eine Brennkraftmaschine ist ein motorrah angeordneter Oxidationskatalysator zur Oxidation vo Stickoxiden vorgesehen. In Abgasströmungsrichtung hinter dem Stickoxid-Oxidationskatalysator befindet sich eine Düse zum Einspritzen eines zugeführten Reduktionsmittels in den Abgasstrom. Stromabwärts der Düse folgen dann nacheinander ein Stickoxidkatalysator und ein weiterer Oxidationskatalysator, der im Abgas enthaltene Kohlenwasserstoffe und Kohlenmonoxid oxidiert.

Der Erfindung liegt als technisches Problem die Bereitstellung einer Abgasreinigungsanlage mit gegenüber den oben angegebenen, bekannten Anlagen weiter verbesserter Abgasreinigungsfunktionalität zugrunde.

Dieses Problem wird durch eine Abgasreinigungsanlage mit den Merkmalen des Ansprchs 1 oder 4 gelöst. Bei dieser Anlage ist stromaufwärts von den Stickoxid-Adsorberteilen motornah ein Oxidationskatalysator angeordnet, mit dem bereits vergleichsweise frühzeitig nach einem jeweiligen Motorstart die Abgaskomponente NO zu NO₂ oxidiert werden kann. Da zahlreiche Adsorbermaterialien NO₂ wesentlich besser als No adsorbieren, lassen sich für die nachgeschalteten Stickoxid-Adsorberteile höhere NOₓ-Adsorptionsraten erzielen. Gleichzeitig können mit dem Oxidationskatalysator die Abgaskomponenten Kohlenmonoxid und Kohlenwasserstoffe oxidiert werden. Zweckmäßig ist eine möglichst motorfer-ne Anordnung der Stickoxid-Adsorberteile, um ein niedriges Temperaturniveau für die NOₓ-Adsorption zu erzielen, so dass Adsorptionsmaterialien verwendet werden können, die gegenüber hohen Abgastemperaturen und somit auch hohen Desorptionstemperaturen nicht resistent sind oder bei hohen Temperaturen keine oder nur eine geringe NOₓ-Adsorptionsfähigkeit besitzen.

Bei der Abgasreinigungsanlage nach Anspruch 1 ist speziell ein stromaufwärts der Adsorberteile gelegener Abgasleitungsabschnitt in vorteilhafter Weise in einen Hauptstromleitungszweig und einen Teilstromleitungszweig aufgeteilt. Durch die geringere Länge und/oder die bessere thermische Isolierung des Teilstromleitungszweiges liegt dessen austrittsseitige Abgastemperatur und damit die Temperatur des aus diesem Zweig in den jeweiligen Adsorberteilen eingeleiteten Abgasteilstromes deutlich über der entsprechenden Temperatur des durch den Hauptstromleitungszweig geführten Abgashauptstromes. Dabei wird dem jeweiligen Adsorberteil im Adsorptionsbetrieb der kältere Abgashauptstrom und im Desorptionsbetrieb der wärmere Abgasteilstrom zugeführt. Im Desorptionsbetrieb wird folglich der Adsorberteil vom Abgasteilstrom erwärmt, so daß die in ihm gespeicherten Stickoxide desorbiert und in die Ansaugleitung der Brennkraftmaschine zurückgeführt werden. Eine separate Beheizung der Adsorberteile während des Desorptionsbetriebes ist daher überhaupt nicht oder jedenfalls nur noch in einem geringem Maße notwendig, was die Energiebilanz der Anlage verbessert. Aufgrund der Verwendung des Abgasteilstroms wird außerdem kein zusätzlicher Spülluftstrom für den Desorptionsbetrieb der Adsorberteile benötigt.

Günstige Positionierungen des Oxidationskatalysators für diese Anlage sind in Anspruch 2 angegeben. Bei der Variante, bei welcher der Oxidationskatalysator innerhalb des Hauptstromleitungszweiges angeordnet ist, werden die Kohlenwasserstoffe im Abgasteilstrom, der zur Desorption der Stickoxide im jeweiligen Adsorberteil genutzt wird, nicht oxidiert. Dieser Umstand kann bei Adsorptionsmaterialien ausgenutzt werden, bei denen zwischen den Kohlenwasserstoffen und den Stickoxiden eine konkurrierende Adsorption stattfindet. Die im jeweiligen Adsorberteil gespeicherten Stickoxide werden in diesem Fall aufgrund der konkurrierenden Adsorption im Desorptionsbetrieb leichter desorbiert.

Alternativ zu einer Realisierung der beiden Adsorberteile als getrennte Adsorberkörper ist bei der Abgasreinigungsanlage nach Anspruch 3 und Anspruch 4 deren integrale Realisierung innerhalb eines gemeinsamen Adsorberkörpers vorgesehen, der durch eine geeignete, eintrittsseitige sowie vorzugsweise eine dazu korrespondierende austrittsseitige Sektorunterteilungsblende in die beiden Adsorberteile unterteilt ist. Durch eine Relativdrehbewegung zwischen der wenigstens eintrittsseitig vorgesehenen Sektorunterteilungsblende und dem Adsorberkörper mit parallel zur Abgasströmungsrichtung verlaufender Drehachse liegt jedes Teilvolumen des Adsorberkörpers jeweils für eine einstellbare Zeitspanne im Sektorbereich für den Adsorptionsbetrieb und anschließend im Sektorbereich für den Desorptionsbetrieb.

Bei einer nach Anspruch 5 weitergebildeten Anlage wird die Desorption durch Zugabe eines Desorptionshilfsmittels unterstützt, so daß eine effektive Desorption schon bei vergleichsweise niedrigerer Temperatur erfolgen kann. Als desorptionsfördernden Bestandteil enthält dieses Hilfsmittel wenigstens Kohlenwasserstoffe sowie ggf. weitere Bestandteile, die beispielsweise bei Verwendung in einem Kraftfahrzeug sämtlich aus dem für dessen Brennkraftmaschine mitgeführten Kraftstoff gewonnen werden können.

Bei einer nach Anspruch 6 weitergebildeten Anlage wird jedenfalls ein Teil der dem jeweils im Desorptionsbetrieb arbeitenden Adsorberteil zugeführten Wärmeenergie durch Verbrennung des für die Brennkraftmaschine vorgesehenen Kraftstoffs bereitgestellt, der beispielsweise bei Verwendung in einem Kraftfahrzeug ohnehin mitgeführt wird. Dabei wird der Brenner zweckmäßigerweise so betrieben, dass das von ihm erzeugte, heiße Gas eine desorptionsfördernde Zusammensetzung aufweist, d.h. keinen oder nur wenig Sauerstoff, jedoch unverbrannte Kohlenwasserstoffe enthält.

Bevorzugte Ausführungsformen der Erfindung sind in den Zeichnungen dargestellt und werden nachfolgend beschrieben. Hierbei zeigen:
- Fig. 1: ein Blockdiagramm einer Abgasreinigungsanlage eines Kraftfahrzeuges,
- Fig. 2: ein Blockdiagramm einer Abgasreinigungsanlage entsprechend Fig. 1, jedoch mit modifizierter Positionierung eines Oxidationskatalysators, und
- Fig. 3: eine schematische Perspektivansicht eines Adsorberkörpers mit zwei integralen Adsorberteilen für eine Abgasreinigungsanlage eines Kraftfahrzeuges.

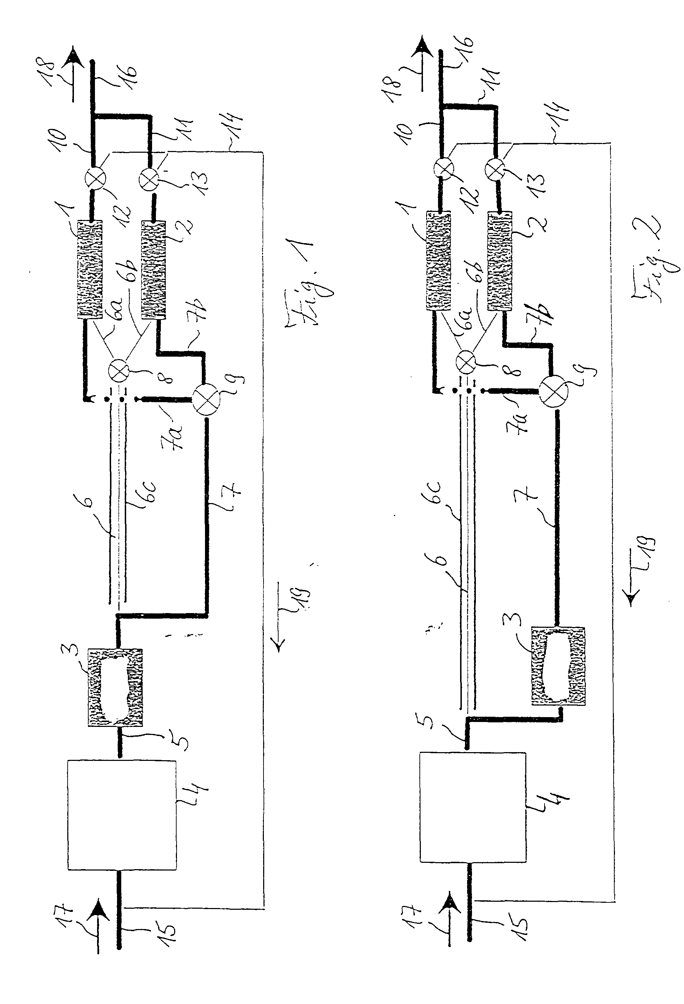

Die in Fig. 1 dargestellte Abgasreinigungsanlage enthält als abgasreinigende Komponenten zwei Stickoxid-Adsorberteile in Form zweier separater Adsorber (1, 2) und einen Oxidationskatalysator (3). Der Oxidationskatalysator (3) befindet sich innerhalb eines vom Abgasausgang der zugehörigen, abgaserzeugenden Brennkraftmaschine, hier einem Kraftfahrzeugmotor (4), abführenden Abgasleitungsabschnitts (5) und ist möglichst motornah positioniert, während die beiden Adsorber (1, 2) möglichst motorfern angeordnet sind. Der Katalysator (3) oxidiert insbesondere im Abgas enthaltenes NO zu NO₂, daneben aber auch CO zu CO₂ und die im Abgas enthaltenen Kohlenwasserstoffe. Durch die motornahe Positionierung des Oxidationskatalysators (3) setzt eine wirksame Oxidationsreaktion bereits sehr frühzeitig nach einem jeweiligen Start des Motors (4) ein. Strömungs-abwärts des Oxidationskatalysators (3) verzweigt sich die Abgasleitungsstrecke in einen Teilstromleitungszweig (6) und einen Hauptstromleitungszweig (7). Dabei ist der Teilstromleitungszweig (6) mit möglichst geringer Länge ausgelegt und durch eine Ummantelung (6c) wirksam thermisch gegen die Umgebung isoliert, während im Gegensatz dazu der Hauptstromleitungszweig (7) als verlängerte, thermisch nicht isolierte Leitung ausgelegt ist, so daß die Abgastemperatur am Ausgang des Teilstromleitungszweiges (6) noch deutlich höher als diejenige am Ausgang des Hauptstromleitungszweiges (7) ist. Zur steuerbaren Zuführung von Abgas aus dem Teilstromleitungszweig (6) oder dem Hauptstromleitungszweig (7) zu den parallel angeordneten Stickoxid-Adsorbern (1, 2) befindet sich am strömungsabwärts gelegenen Ende sowohl des Teilstromleitungszweiges (6) als auch des Hauptstromleitungszweiges (7) je ein Steuerventil (8, 9), wobei vom Teilstromleitungszweig-Steuerventil (8) je eine Teilstromzuleitung (6a, 6b) zum jeweiligen Adsorber (1, 2) und entsprechend vom Hauptstrom-leitungszweig-Steuerventil (9) zwei Hauptstromzuleitungen (7a, 7b) zum jeweiligen Adsorber (1, 2) führen. Von jedem der beiden Adsorber (1, 2) führt eine Auslaßleitung (10, 11) ab, wobei in jeder dieser beiden Auslaßleitungen (10, 11) ein Steuerventil (12, 13) vorgesehen ist, mit dem der aus dem zugehörigen Adsorber austretende Abgasstrom steuerbar entweder zu einer weiterführenden Abgasleitung (16) durchgelassen oder in eine Rückführleitung (14) eingeleitet wird, die in eine eingangsseitige Ansaugleitung (15) des Motors (4) einmündet. Strömungsabwärts der beiden Rückführleitungs-Steuerventile (12, 13) vereinigen sich die beiden Auslaßleitungen (10, 11) zu der gemeinsamen, weiterführenden Abgasleitung (16).

Die oben in ihrem Aufbau erläuterte Abgasreinigungsanlage von Fig. 1 arbeitet wie folgt. In den Brennräumen eines Motors (4) wird durch Verbrennen eines Kraftstoff/Luftgemisches (17) Abgas erzeugt, das aus den Brennräumen in den abführenden Abgasleitungsabschnitt (5) und dabei in den motornah positionierten Oxidationskatalysator (3) gelangt. Dieser oxidiert das Stickstoffmonoxid, das Kohlenmonoxid und die Kohlenwasserstoffe, die im Abgas enthalten sind. Vom Oxidationskatalysator (3) wird dann das Abgas zu einem kleineren Anteil durch den Teilstromleitungszweig (6) und zu einem größeren Anteil durch den dazu parallelen Hauptstromleitungszweig (7) geleitet, wobei das Verhältnis der beiden Anteile vom Verhältnis der Durchtrittsquerschnitte beider Zweige (6, 7) bestimmt ist. Alternativ kommt natürlich auch die Dosierung der jeweiligen Abgasmenge über Ventile, z.B. die beiden gezeigten Ventile (8, 9) vor den Adsorbern (1, 2) oder zusätzlich anzuordnende Ventile in Betracht.

Von den beiden parallelen Stickoxid-Adsorbern (1, 2) wird jeweils der eine im Adsorptionsmodus und der andere im Desorptionsmodus betrieben. Dazu werden die beiden Steuerventile (8, 9) vor den Adsorbern (1, 2) und die beiden Steuerventile (12, 13) hinter den Adsorbern (1, 2) so geschaltet, daß dem momentan im Adsorptionsbetrieb arbeitenden Adsorber der Abgasstrom des Hauptstromleitungszweiges (7) und dem anderen, momentan im Desorptionsbetrieb arbeitenden Adsorber der Abgasstrom des Teilstromleitungszweiges (6) zugeführt werden und der voll gereinigte Abgasstrom, der aus dem gerade adsorbierenden Adsorber austritt, an die stromabwärts weiterführende Abgasleitung (16) weitergeleitet wird, während der aus dem gerade desorbierenden Adsorber austretende Abgasstrom in die Rückführleitung (14) eingespeist und über diese als Rückstrom (19) der Ansaugleitung (15) zugeführt wird. Das im Desorptionsbetrieb dem betreffenden Adsorber entzogene Stickoxid wird auf diese Weise dem zu verbrennenden Kraftstoffgemisch (17) des Motors (4) beigemischt und durch den Verbrennungsvorgang im Motor (4) zu Stickstoff und Sauerstoff reagiert, während das aus dem im Adsorptionsbetrieb arbeitenden Adsorber austretende Abgas als gereinigter Abgasstrom (18) über eine Auspuffanlage ausgestoßen wird.

Da im Oxidationskatalysator das im Abgas enthaltene Stickstoffmonoxid bereits zu Stickstoffdioxid oxidiert wird, läßt sich für den jeweiligen Adsorptionsbetrieb der Adsorber (1, 2) eine vergleichsweise hohe NOₓ-Adsorptionsrate erzielen. Da derjenige Abgasanteil, der dem jeweils im Adsorptionsbetrieb arbeitenden Adsorber zugeführt wird, aus dem mit vergleichsweise großer Länge und ohne thermische Isolation ausgelegten Hauptstromleitungszweig (7) stammt und daher bei Eintritt in den Adsorber bereits ein relativ niedriges Temperaturniveau erreicht hat, können in den Adsorbern (1, 2) problemlos Materialien zum Einsatz kommen, die gegenüber hohen Abgastemperaturen und somit hohen Adsorptionstemperaturen nicht resistent sind oder bei hohen Temperaturen keine oder nur eine geringe NOₓ- Adsorptionsfähigkeit besitzen. Bei Bedarf kann die Abgastemperatur im Hauptstromleitungszweig (7) durch zusätzliche Kühlungsmaßnahmen, wie das Vorsehen von Kühllamellen, absenkt werden. Im Gegensatz dazu ist die Temperatur des aus dem Teilstromleitungszweig (6), der mit vergleichsweise kurzer Länge und hoher thermischer Isolation ausgelegt ist, stammenden und dem jeweils im Desorptionsbetrieb arbeitenden Adsorber zugeführten Abgasteilstromes bei Eintritt in den betreffenden Adsorber noch vergleichsweise hoch und liegt insbesondere deutlich über der Temperatur des in den anderen, im Adsorptionsmodus befindlichen Adsorber eingeleiteten Abgashauptstromes. Dies bewirkt eine Erwärmung des im Desorptionsmodus befindlichen Adsorbers, wodurch die dort zuvor adsorbierten Stickoxide wirksam desorbiert werden. Eine Zusatzbeheizung des jeweils im Desorptionsmodus befindlichen Adsorbers ist dadurch nicht oder nur zur Erzielung einer relativ geringfügigen weiteren Temperaturerhöhung notwendig, was zu einer günstigen Energiebilanz der Anlage führt. Für den jeweiligen Desorptionsbetrieb abwechselnd in einem der beiden Adsorber wird durch die Verwendung des aus dem Teilstromleitungszweig (6) stammenden Abgasstromes kein zusätzlicher Spülluftstrom benötigt.

Eine Betriebsumschaltung der beiden Adsorber (1, 2) von Adsorption auf Desorption beim einen und umgekehrt von Desorption auf Adsorption beim anderen Adsorber erfolgt jeweils dann, wenn durch herkömmliche, hier nicht näher zu erläuternde Mittel erkannt wird, daß der gerade im Adsorptionsmodus betriebene Adsorber regeneriert werden muß. Dazu wird eine geeignete Umsteuerung der vier Ventile (8, 9, 12, 13) dergestalt durchgeführt, daß dem zuvor desorbierenden Adsorber der Abgashauptstrom anstelle des Abgasteilstromes und dem anderen, zuvor adsorbierenden Adsorber der Abgasteilstrom anstelle des Abgashauptstromes zugeführt wird, während gleichzeitig der Abgasstrom des zuvor desorbierenden und nun adsorbierenden Adsorbers auf Weiterleitung zum Auspuff und derjenige des nunmehr desorbierenden Adsorbers auf Einspeisung in die Rückleitung (19) umgestellt werden.

In Fig. 2 ist eine gegenüber derjenigen von Fig. 1 lediglich in der Positionierung des Oxidationskatalisators (3) modifizierte Abgasreinigungsanlage dargestellt, wobei funktionell gleiche Komponenten mit gleichen Bezugszeichen belegt sind und insoweit auf die Beschreibung der Anlage von Fig. 1 verwiesen werden kann. Bei der Anlage von Fig. 2 befindet sich der Oxidationskatalysator (3) innerhalb eines Eintrittsbereiches des Hauptstromleitungszweiges (7) und nicht in dem gemeinsam dem Teilstromleitungszweig (6) und dem Hauptstromleitungszweig (7) vorgelagerten Abgasleitungsabschnitt (5). Dies hat zur Folge, daß bei dieser Anlage der durch den Teilstromleitungszweig (6) geleitete Abgasteilstrom zuvor nicht durch den Oxidationskatalysator (3) hindurchströmt und daher unter anderem noch nicht oxidierte Kohlenwasserstoffe enthält. Dies kann zu einer Förderung der Desorptionsfähigkeit der beiden Stickoxid-Adsorber (1, 2) genutzt werden, wenn in selbigen Adsorbermaterialien verwendet werden, bei denen zwischen solchen nicht oxidierten Kohlenwasserstoffen und den Stickoxiden eine konkurrierende Adsorption, d.h. eine Verdrängungsadsorption, stattfindet. Denn durch Zuleitung dieses die Kohlenwasserstoffe enthaltenden Abgasteilstromes aus dem Teilstromleitungszweig (6) in den jeweils im Desorptionsbetrieb arbeitenden Adsorber können die angelagerten Stickoxide in diesem Adsorber durch die konkurrierende Adsorption der Kohlenwasserstoffe leichter desorbiert und anschließend im Rückführstrom (19) wieder in die Motoransaugleitung (15) zurückgeführt werden.

Speziell für die Anwendung bei Kraftfahrzeugen kann die Desorption des weiteren in nicht näher gezeigter Weise durch Zugabe von Desorptionshilfsmitteln gefördert werden, die aus dem im Fahrzeug ohnehin zum Betrieb der Brennkraftmaschine mitgeführten Kraftstoff gewonnen werden. Es zeigt sich hierbei, daß insbesondere Kohlenwasserstoffe eine solche desorptionsfördernde Wirkung besitzen, indem sie die Zusammensetzung der Gasphase des im desorbierenden Adsorberteil befindlichen Abgases bzw. die Zusammensetzung der Adsorberfläche so beeinflussen, daß eine effektive Desorption bereits bei vergleichsweise niedriger Temperatur erfolgt. Als erste Möglichkeit kann vorgesehen sein, den Kraftstoff direkt in den im Desorptionsbetrieb arbeitenden Adsorberteil oder in denjenigen Teilstromleitungszweig des Abgasstrangs zuzugeben, der das Abgas zum momentan im Desorptionsbetrieb arbeitenden Adsorberteil leitet. Als Alternative zur Zugabe des Kraftstoffs selbst kann ein Gemisch von Kohlenwasserstoffen und anderen Reaktionsprodukten zugegeben werden, das durch thermische oder katalytische Umwandlung des Kraftstoffs an Bord des Fahrzeuges erzeugt wird. Diese thermische oder katalytische Umwandlung des Kraftstoffs führt zu einer noch besseren Wirksamkeit für die Desorption der Stickoxide als die Verwendung des Kraftstoffs selbst. Als weitere Alternative kann ein derartiges Gemisch zusätzlich Wasserstoff beinhalten, der sich gleichfalls desorptionsfördernd auswirkt. Die Verwendung derartiger Desorptionshilfsmittel verringert den Aufwand zur thermischen Isolation des Abgasteilstromleitungszweiges für den Desorptionsbetrieb und/oder für eine zusätzlich Aufheizung des gerade desorbierenden Adsorbers.

Eine weitere, nicht näher gezeigte Möglichkeit der Desorptionsförderung besteht darin, mittels eines Brenners, der Kraftstoff aus dem Kraftstofftank des Fahrzeugs als Brennstoff benutzt, ein heißes Gas zu erzeugen, das dem desorbierenden Adsorberteil direkt oder durch Zugabe in den betreffenden Teilstromleitungszweig zugeführt wird. Durch diese Maßnahme kann eine ansonsten ggf. notwendige, elektrisch betriebene Heizvorrichtung entfallen. Bevorzugt wird der Brenner so betrieben, daß das von ihm erzeugte heiße Gas keine oder nur geringe Sauerstoffanteile enthält, dagegen jedoch Reste von unverbrannten Kohlenwasserstoffen, die dann ein Desorptionshilfsmittel darstellen, das die Stickoxiddesorption zusätzlich zur Temperaturanhebung begünstigt.

Vorzugsweise werden das heiße Gas bzw. die anderen genannten Desorptionshilfsmittel nach Durchtritt durch den desorbierenden Adsorberteil zusammen mit den desorbierten Stickoxiden in die Ansaugluft des Motors geleitet. Bei der nachfolgenden Verbrennung werden die Stickoxide zu Stickstoff und Sauerstoff, die übrigen Gasgemischkomponenten überwiegend zu Kohlendioxid und Wasser umgewandet. Die Desorption und Rückführung des Desorptionsgases in die motorische Verbrennung wird bevorzugt bei hoher Motorlast, bei einem Ottomotor zusätzlich vorzugsweise beim Betrieb unter stöchiometrischen oder fetten Betriebsbedingungen durchgeführt.

Für die Zugabe des Kraftstoffs bzw. des daraus gewonnenen, kohlenwasserstoffhaltigen Gemisches ist zweckmäßigerweise eine Dosiervorrichtung vorgesehen, die über die Motorsteuerung gezielt betätigt werden kann. Es versteht sich, daß die Zugabe derartiger Desorptionshilfsmittel mit einer elektrischen Beheizung des desorbierenden Adsorberteils kombiniert werden kann. Diese kann jedoch bei Verwendung der Desorptionshilfsmittel mit geringerer Leistung betrieben werden, da sich dadurch eine effektive Desorption bereits bei tieferer Temperatur ergibt.

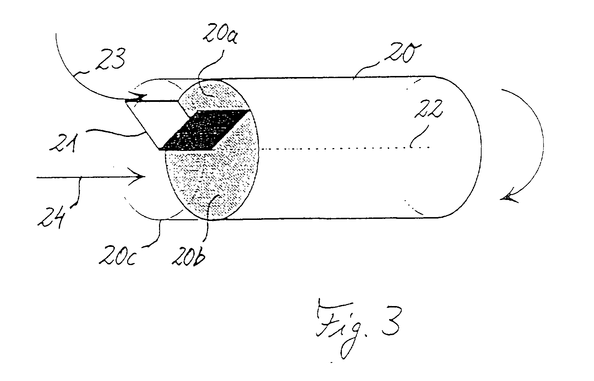

Fig. 3 zeigt eine Variante für die in den Figuren 1 und 2 verwendeten Stickoxid-Adsorber, bei der die beiden Adsorberteile (20a, 20b), von denen jeweils der eine (20a) im Desorptionsmodus und der andere (20b) im Adsorptionsmodus betrieben werden, integral von einem gemeinsamen, zylindrischen Adsorberkörper (20) gebildet sind. Der Adsorberkörper (20) ist um seine Längsachse (22) drehbar gelagert, die parallel zur Abgasströmungsrichtung liegt. An der abgaseintrittsseitigen Stirnseite endet der Adsorberkörper (20) in einer Eintrittshülse (20c), die eine Sektorunterteilungsblende (21) aufnimmt, welche die kreisförmige, eintrittsseitige Stirnfläche des Adsorberkörpers (20) in einen Desorptionssektor und einen gegenüber diesem größeren Adsorptionssektor unterteilt. In den Desorptionssektor wird der desorbierende Abgasstromanteil (23) eingeleitet, während der dem Adsorberbetrieb dienende Abgasströmungsanteil (24) dem Adsorptionssektor zugeführt wird. Die beiden Abgasströmungsanteile (23, 24) durchströmen folglich im wesentlichen voneinander separiert den desorbierenden (20a) bzw. adsorbierenden Adsorberteil (20b).

Damit jedes Teilvolumen des Adsorberkörpers (20) periodisch im Adsorptions- und Desorptionsmodus betrieben wird, wird der Adsorberkörper (20) um seine Längsachse (22) relativ zur feststehenden Sektorunterteilungsblende (21) in Drehung versetzt, so daß jedes Adsorberkörperteilvolumen abhängig von der Rotationsgeschwindigkeit und dem Sektorwinkel der Sektorunterteilungsblende (21) abwechselnd jeweils für eine erste Zeitspanne dem adsorbierenden Adsorberteil (20b) und für eine zweite Zeitspanne dem desorbierenden Adsorberteil (20a) angehört. Vorzugsweise ist auch an der ausgangsseitigen Stirnseite des Adsorberkörpers (20) eine nicht gezeigte Sektorunterteilungsblende vorgesehen, die in ihrer Dimensionierung der eintrittsseitigen (21) entspricht. Dabei ist die austrittsseitige Sektorunterteilungsblende gegenüber der eintrittsseitigen (21) um einen Drehwinkel versetzt, der dem Drehwinkel entspricht, welcher vom durch den Adsorberkörper (20) strömenden Abgas (23, 24) durch die Rotation des Adsorberkörpers (20) zurückgelegt wird. Dadurch können gezielt der das mittels Desorption freigesetzte, Stickoxid enthaltende Abgasteilstrom (23) und der vom adsorbierten Stickoxid befreite Abgasteilstrom (24) getrennt voneinander aus dem Adsorberkörper (20) abgeleitet werden. Dies trägt der Tatsache Rechnung, daß die beiden integralen Adsorberteile (20a, 20b) Teilvolumina des Adsorberkörpers (20) bilden, die durch die sich schraubenförmig axial durch den Adsorberkörper (20) windenden Sektoren gegeben sind, die eintrittsseitig von der Sektorunterteilungsblende (21) definiert werden. Diese integrale Realisierung der beiden Adsorberteile (20a, 20b) hat gegenüber den Adsorbern der Figuren, 1 und 2 den Vorteil, daß keine zwei getrennten Adsorberkörper benötigt werden und zudem keine klappengesteuerte Abgaszuführung zu den Adsorberteilen erforderlich ist.

Es versteht sich, daß neben den beiden beschriebenen Beispielen weitere Ausführungsformen der Erfindung, wie sie durch die Patentansprüche definiert ist, realisierbar sind, beispielsweise Abgasreinigungsanlagen mit mehr als zwei parallel angeordneten Stickoxid-Adsorberteilen und funktionsgerecht modifizierter Aufteilung der diesen Adsorberteilen vorgelagerten, einen oder mehrere motornahe Oxidationskatalysatoren enthaltenden Abgasleitungsstrecke.

## Patentansprüche

1. Abgasreinigungsanlage für eine Brennkraftmaschine, mit
- zwei parallel angeordneten Adsorberteilen (1, 2) zur wechselseitigen Adsorption und Desorption von im Abgas der Brennkraftmaschine (4) enthaltenen Stickoxiden und
- Mitteln (10 bis 14, 16) zur Stromabwärts-Weiterleitung des aus dem jeweils im Adsorptionsmodus betriebenen Adsorberteils austretenden Abgasstromes und zur Rückführung des aus dem jeweils anderen, im Desorptionsbetrieb arbeitenden Adsorberteils austretenden Abgasstromes in eine Ansaugleitung (15) der Brennkraftmaschine (4),
**dadurch gekennzeichnet, dass**
- ein stromaufwärts der Adsorberteile (1, 2) motornah angeordneter Oxidationskatalysator (3) zur Oxidation wenigstens von im Abgas enthaltenem NO zu NO₂ vorgesehen ist und
- ein stromaufwärts der Adsorberteile (1, 2) gelegener Abgasleitungsabschnitt in einen Hauptstromleitungszweig (7) und einen zu diesem parallelen und gegenüber diesem kürzeren und/oder stärker thermisch isolierten Teilstromleitungszweig (6) aufgeteilt ist, wobei die beiden Adsorberteile über Steuerventile (8, 9) derart an den Hauptstromleitungszweig und den Teilstromleitungszweig angekoppelt sind, daß der jeweils im Adsorptionsmodus betriebene Adsorberteil vom Abgasstrom des Hauptstromleitungszweiges und der jeweils andere, im Desorptionsmodus betriebene Adsorberteil vom Abgasstrom des Teilstromleitungszweiges gespeist werden.

2. Abgasreinigungsanlage nach Anspruch 1, weiter
**dadurch gekennzeichnet, dass**
der Oxidationskatalysator (3) innerhalb eines dem Hauptstromleitungszweig (7) und dem Teilstromleitungszweig (6) gemeinsamen, strömungsaufwärts derselben gelegenen Abgasleitungsabschnitts (5) oder innerhalb eines Eingangsbereiches des Hauptstromleitungszweiges (7) angeordnet ist.

3. Abgasreinigungsanlage nach Anspruch 1 oder 2, weiter
**dadurch gekennzeichnet, dass**
die beiden Adsorberteile (20a, 20b) als integrale Teile eines zylinderförmigen, in Längsrichtung durchströmten Adsorberkörpers (20) gebildet sind, der in die beiden Adsorberteile wenigstens mittels einer eintrittsseitig angeordneten Sektorunterteilungsblende (21) unterteilt ist, wobei Mittel zur Relativdrehbewegung um eine zur Strömungsrichtung parallele Drehachse zwischen der wenigstens eintrittsseitig angeordneten Sektorunterteilungsblende und dem Adsorberkörper vorgesehen sind.

4. Abgasreinigungsanlage für eine Brennkraftmaschine, mit
- zwei parallel angeordneten Adsorberteilen (1, 2) zur wechselseitigen Adsorption und Desorption von im Abgas der Brennkraftmaschine (4) enthaltenden Stickoxiden und
- Mitteln (10 bis 14, 16) zur Stromabwärts-Weiterleitung des aus dem jeweils im Adsorptionsmodus betriebenen Adsorberteils austretenden Abgasstromes und zur Rückführung des aus dem jeweils anderen, im Desorptionsbetrieb arbeitenden Adsorberteils austretenden Abgasstromes in eine Ansaugleitung (15) der Brennkraftmaschine (4),
**dadurch gekennzeichnet, dass**
- ein stromaufwärts der Adsorberteile (1, 2) motornah angeordneter Oxidationskatalysator (3) zur Oxidation wenigstens von im Abgas enthaltendem NO zu NO₂ vorgesehen ist und
- die beiden Adsorberteile (20a, 20b) als integrale Teile eines zylinderförmigen, in Längsrichtung durchströmten Adsorberkörpers (20) gebildet sind, der in die beiden Adsorberteile wenigstens mittels einer eintrittsseitig angeordneten Sektorunterteilungsblende (21) unterteilt ist, wobei Mittel zur Relativdrehbewegung um eine zur Strömungsrichtung parallele Drehachse zwischen der wenigstens eintrittsseitig angeordneten Sektorunterteilungsblende und dem Adsorberkörper vorgesehen sind.

5. Abgasreinigungsanlage nach einem der Ansprüche 1 bis 4, weiter
**dadurch gekennzeichnet, dass** Mittel vorgesehen sind, um dem jeweils im Desorptionsbetrieb arbeitenden Adsorberteil ein kohlenwasserstoffhaltiges Desorptionshilfsmittel zuzugeben, wobei das Desorptionshilfsmittel optional Wasserstoff und/oder durch thermische oder katalytische Umwandlung des für die Brennkraftmaschine verwendeten Kraftstoffs erzeugte Reaktionsprodukte enthalten kann.

6. Abgasreinigungsanlage nach einem der Ansprüche 1 bis 5, weiter
**dadurch gekennzeichnet, dass** Mittel vorgesehen sind, um dem jeweils im Desorptionsbetrieb arbeitenden Adsorberteil ein heißes Gas zuzuführen, wobei das Gas in einem Brenner durch Verbrennung des Kraftstoffs für die Brennkraftmaschine derart erzeugt werden kann, dass es einen höchstens geringen Sauerstoffanteil und einen Mindestrestanteil an unverbrannten Kohlenwasserstoffen enthält.

## Claims

1. Exhaust gas purification unit for a combustion engine, with:
- two adsorber elements (1,2) arranged in parallel for the alternating adsorption and desorption of nitrogen oxides present in the exhaust gas from the combustion engine (4), and
- means (10 to 14, 16) for passing on further downstream the exhaust gas emerging from the respective adsorber element being operated in the adsorption mode, and for feeding the exhaust gas stream emerging from the other adsorber element being operated in the desorption mode back into an inlet manifold (15) of the combustion engine (4),
**characterised in that**
- an oxidation catalyser (3) is provided upstream from the adsorber elements (1, 2) and close to the engine, to oxidise at least the NO present in the exhaust to NO₂, and
- an exhaust pipe section (5) upstream from the adsorber elements (1, 2) divides to form a main branch (7) and a secondary branch (6) parallel to, shorter than and/or thermally better insulated than the branch (7), such that the two adsorber elements are connected to the main and secondary branches via control valves (8, 9) in such manner that the respective adsorber element operating in the adsorption mode is fed with the exhaust gas stream from the main branch while the other adsorber element operating in the desorption mode is fed with the exhaust gas stream from the secondary branch.

2. Exhaust gas purification unit according to Claim 1, further
**characterised in that**
the oxidation catalyser (3) is located within a common exhaust pipe section (5) upstream from both the main branch (7) and the secondary branch (6), or within an inlet section of the main branch (7).

3. Exhaust gas purification unit according to Claims 1 or 2, further
**characterised in that**
the two adsorber elements (20a, 20b) are formed as integral parts of a cylindrical adsorber body (20) through which the flow passes longitudinally, which is divided into the two adsorber elements at least by one sector-dividing partition (21) arranged on the inlet side, and means are provided for a relative rotational movement about a rotation axis parallel to the flow direction, between the sector-dividing partition arranged at least on the inlet side and the adsorber body.

4. Exhaust gas purification unit for a combustion engine, with:
- two adsorber elements (1, 2) arranged in parallel for the alternating adsorption and desorption of nitrogen oxides present in the exhaust gas from the combustion engine (4), and
- means (10 to 14, 16) for passing on further downstream the exhaust gas stream emerging from the respective adsorber element being operated in the adsorption mode, and for feeding the exhaust gas stream emerging from the other adsorber element being operated in the desorption mode back into an inlet manifold (15) of the combustion engine (4),
**characterised in that**
- an oxidation catalyser (3) is provided upstream from the adsorber elements (1, 2) and close to the engine, to oxidise at least the NO present in the exhaust to NO₂, and
- the two adsorber elements (20a, 20b) are formed as integral parts of a cylindrical adsorber body (20) through which the flow passes longitudinally, which is divided into the two adsorber elements at least by one sector-dividing partition (21) arranged on the inlet side, and means are provided for a relative rotational movement about a rotation axis parallel to the flow direction, between the sector-dividing partition arranged at least on the inlet side and the adsorber body.

5. Exhaust gas purification unit according to any of Claims 1 to 4, further
**characterised in that**
means are provided to introduce into whichever adsorber element is operating in the desorption mode a desorption adjuvant containing hydrocarbons, and the said desorption adjuvant can optionally also contain hydrogen and/or reaction products produced by thermal or catalytic transformation of the fuel used for the combustion engine.

6. Exhaust gas purification unit according to any of Claims 1 to 5, further
**characterised in that**
means are provided to introduce into whichever adsorber element is operating in the desorption mode a hot gas, the said gas being produced in a burner by burning the fuel for the combustion engine in such manner that the gas contains at most a small fraction of oxygen and a minimum residual fraction of uncombusted hydrocarbons.

## Revendications

1. Installation d'épuration des gaz d'échappement pour un moteur à combustion interne, avec
- deux parties adsorbeuses (1, 2) disposées en parallèle, pour assurer en alternance l'adsorption et la désorption des oxydes d'azote contenus dans les gaz d'échappement du moteur à combustion interne (4), et
- des moyens (10 à 14, 16), pour continuer à transmettre en aval l'écoulement du flux de gaz d'échappement sortant chaque fois de la partie adsorbeuse fonctionnant en mode en adsorption et pour recycler le flux de gaz d'échappement, sortant chaque fois de l'autre partie adsorbeuse travaillant en fonctionnement en désorption, dans une conduite d'aspiration (15) du moteur à combustion interne (4),
caractérisée en ce qu'
- un catalyseur à oxydation (3) disposé près du moteur, en amont des parties adsorbeuses (1, 2) est prévu pour l'oxydation en NO₂ d'au moins le NO contenu dans les gaz d'échappement, et
- un tronçon de conduite de gaz d'échappement, installé en amont des parties adsorbeuses (1, 2), est subdivisé en une ramification de conduite d'écoulement principal (7), et en une ramification de conduite d'écoulement partiel (6) lui étant parallèle, plus fortement isolée thermiquement et/ou et plus courte que celle-ci, les deux parties adsorbeuses étant accouplées à la ramification de conduite d'écoulement principal et à la ramification de conduite d'écoulement partiel par l'intermédiaire de soupapes de commande (8, 9), de manière que, chaque fois, la partie adsorbeuse, fonctionnant en mode en adsorption, soit alimentée par un flux de gaz d'échappement venant de la ramification de conduite d'écoulement principal et que, chaque fois, l'autre partie adsorbeuse, fonctionnant en mode de désorption, soit alimentée par l'écoulement de gaz d'échappement venant de la ramification de conduite d'écoulement partiel.

2. Installation d'épuration des gaz d'échappement selon la revendication 1, caractérisée en outre en ce que le catalyseur à oxydation (3) est disposé à l'intérieur d'un tronçon de conduite de gaz d'échappement (5), commun à la ramification de conduite d'écoulement principal (7) et à la ramification de conduite d'écoulement partiel (6), installé en amont de celles-ci dans l'écoulement, ou à l'intérieur d'une zone d'entrée de la ramification de conduite d'écoulement principal (7).

3. Installation d'épuration des gaz d'échappement selon la revendication 1 ou 2, caractérisée en outre en ce que les deux parties adsorbeuses (20a, 20b) sont constituées à titre de partie intégrante d'un corps adsorbeur (20) à forme cylindrique, traversé par un écoulement se faisant dans la direction longitudinale, qui est subdivisé en les deux parties adsorbeuses, au moins à l'aide d'un écran de subdivision en secteurs (21) disposé côté entrée, des moyens étant prévus, permettant un mouvement de rotation relatif autour d'un axe de rotation parallèle à la direction d'écoulement, entre le au moins un écran de subdivision en secteurs, disposé côté entrée, et le corps adsorbeur.

4. Installation d'épuration des gaz d'échappement pour un moteur à combustion interne, avec
- deux parties adsorbeuses (1, 2) disposées en parallèle, pour assurer en alternance l'adsorption et la désorption des oxydes d'azote contenus dans les gaz d'échappement du moteur à combustion interne (4), et
- des moyens (10 à 14, 16), pour continuer à transmettre en aval l'écoulement du flux de gaz d'échappement sortant chaque fois de la partie adsorbeuse fonctionnant en mode en adsorption et pour recycler le flux de gaz d'échappement, sortant chaque fois de l'autre partie adsorbeuse travaillant en fonctionnement en désorption, dans une conduite d'aspiration (15) du moteur à combustion interne (4),
caractérisée en ce qu'
- un catalyseur à oxydation (3) disposé près du moteur, en amont des parties adsorbeuses (1, 2) dans l'écoulement est prévu pour l'oxydation en NO₂ d'au moins le NO contenu dans les gaz d'échappement, et
- les deux parties adsorbeuses (20a, 20b) sont formées sous forme de parties intégrantes d'un corps adsorbeur (20) à forme cylindrique, parcouru par un écoulement se faisant dans la direction longitudinale, qui est subdivisé en les deux parties adsorbeuses au moins à l'aide d'un écran de subdivision en secteurs (21) disposé côté entrée, des moyens étant prévus entre le au moins un écran de subdivision en secteurs disposé côté entrée et le corps adsorbeur, pour effectuer un mouvement de rotation relatif autour d'un axe de rotation parallèle à la direction d'écoulement.

5. Installation d'épuration des gaz d'échappement selon l'une des revendications 1 à 4, caractérisée en outre en ce que des moyens sont prévus pour ajouter à la partie adsorbeuse, travaillant chaque fois en fonctionnement en désorption, un agent auxiliaire de désorption contenant un hydrocarbure, l'agent auxiliaire de désorption pouvant contenir en option de l'oxygène et/ou des produits de réaction générés par la conversion thermique ou catalytique du carburant utilisé pour le moteur à combustion interne.

6. Installation d'épuration des gaz d'échappement selon l'une des revendications 1 à 5, caractérisée en outre par le fait que des moyens sont prévus, pour amener des gaz chauds à la partie adsorbeuse travaillant chaque fois en fonctionnement en désorption, les gaz pouvant être générés dans un brûleur par combustion du carburant prévu pour le moteur à combustion interne, de manière qu'ils contiennent une teneur en oxygène au maximum de faible valeur et une proportion résiduelle minimale en hydrocarbures imbrûlés.
